# DEMANDE DE BREVET EUROPEEN

(11) **EP 0 631 753 A1**
(43) Date de publication de la demande: **04.01.1995**
(21) Numéro de dépôt: 94401423.2
(22) Date de dépôt: 23.06.1994
(51) Int. Cl.: A47J 37/04

(54) **Fourchette pour broche de rotissoire**

(30) Priorité: 23.06.1993 FR 9307858
(71) Demandeur: ETABLISSEMENTS PIERRE PARROT S.A., F-39104 Dole Cédex (FR)
(72) Inventeur: Thiebaud, Jean-Claude, F-25000 Besancon (FR)
(74) Mandataire: Lemoyne, Didier

(57) **Abrégé**

Fourchette pour broche (200) de rotissoire, formée de deux dents (111,112) parallèles reliées par un travers (120) présentant un trou (121) de guidage de ladite broche.

Selon l'invention, ladite fourchette comporte également une patte (130) de guidage présentant un deuxième trou (131) de guidage de la broche (200), fixée sur un premier côté (122) du travers (120), et une patte (140) de blocage/déblocage élastique portant un trou (141) de blocage/déblocage de la broche (200), fixée sur un deuxième côté (123) du travers, opposé au premier (122), et apte à exercer sur la broche un effort de blocage immobilisant ladite broche (200) contre les bords (124,134) des trous (121,131) de guidage, l'effort de blocage étant supprimé de manière à libérer la broche par une action opposée exercée sur la patte (140) de blocage/ déblocage.

Application à l'industrie électo-domestique.

## Description

La présente invention concerne une fourchette pour broche de rotissoire.

L'invention trouve une application particulièrement avantageuse dans le domaine de l'industrie électro-domestique, notamment l'industrie des rotissoires électriques.

On connaît de l'état de la technique des fourchettes pour broche de rotissoire comportant dans leur partie médiane une pièce de forme sensiblement annulaire présentant un trou de guidage de la broche, le plus souvent de section carrée de manière à ce que la broche puisse entraîner la fourchette dans son mouvement de rotation. Afin d'immobiliser en position la fourchette le long de la broche, la pièce de forme annulaire est percée transversalement par un trou taraudé dans lequel est introduite une vis de blocage. Ladite vis étant débloquée, l'utilisateur peut faire coulisser librement la fourchette le long de la broche pour l'amener dans la position désirée, puis bloquer la fourchette dans cette position en vissant la vis de blocage.

Toutefois, ce type de fourchette pour broche de rotissoire présente un certain nombre d'inconvénients.

Tout d'abord, son coût est relativement élévé. En effet, la fourchette connue décrite ci-dessus comporte plusieurs pièces qui doivent être assemblées et montées. De plus, il faut tarauder la pièce portant le trou de guidage, réaliser la vis de blocage et son filetage, et contrôler que la vis s'adapte bien au taraudage de la pièce de guidage. Toutes ces opérations exigent du temps de main d'oeuvre et des outillages spécifiques qui pèsent lourdement sur le prix de revient final des fourchettes ainsi fabriquées.

Il faut également souligner que le taraudage et le filetage de la vis s'encrassent à l'usage et sont difficiles à nettoyer. De même, ils ont tendance à se détruire par usure.

Enfin, les fourchettes à vis de blocage ne sont pas de manipulation très aisée, l'utilisateur ne sachant pas toujours spontanément dans quel sens tourner la vis.

La demande de brevet français n° 2 246 248 décrit un dispositif de fixation d'une tige de brochette dans lequel deux languettes, décalées l'une par rapport à l'autre, se déforment élastiquement à l'introduction de la tige et exercent une force de pincement sur deux côtés de ladite tige.

Le problème technique à résoudre par l'objet de la présente invention est de réaliser une fourchette pour broche de rotissoire, formée de deux dents parallèles reliées par un travers présentant un trou de guidage de ladite broche, fourchette qui serait également de réalisation beaucoup plus simple et moins coûteuse, de manipulation plus facile et sans risques d'encrassage et d'usure.

La solution au problème technique posé consiste, selon la présente invention, en ce que ladite fourchette comporte également une patte de guidage présentant un deuxième trou de guidage de la broche, fixée sur un premier côté du travers, et une patte de blocage/déblocage élastique portant un trou de blocage/déblocage de la broche, fixée sur un deuxième côté du travers, opposé au premier, et apte à exercer sur la broche un effort de blocage immobilisant ladite broche contre des bords opposés des trous de guidage, l'effort de blocage étant supprimé de manière à libérer la broche par une action opposée exercée sur la patte de blocage/déblocage.

Ainsi, la fourchette pour broche de rotissoire, conforme à l'invention, ne comporte aucune pièce complexe exigeant un usinage particulier, tel que taraudage et filetage. De plus, elle est d'utilisation très simple puisqu'il suffit d'appuyer sur la patte de blocage/déblocage pour permettre le coulissement de la fourchette de l'invention sur la broche, puis de relâcher cette action pour immobiliser la fourchette en position grâce à l'effort de blocage exercée par la patte de blocage/déblocage sur la broche.

Il convient de souligner que, contrairement au dispositif de fixation connu de la demande française n° 2 246 248, la fourchette de l'invention met en jeu trois trous, à savoir un trou de blocage/déblocage qui amène la broche en appui contre deux bords opposés de deux trous de guidage. L'effort exercé est donc une mise en porte-à-faux contre les trous de guidage et non un pincement produit par seulement deux languettes élastiques décalées. D'autre part, l'invention n'implique qu'une seule patte de blocage/déblocage élastique alors que le dispositif de fixation connu met en oeuvre deux languettes élastiques.

Selon un mode de réalisation avantageux, la fourchette, objet de l'invention, est constituée d'une pièce unique découpée dans une tôle d'acier et formée dans un outil à suivre. On obtient de cette manière une pièce monobloc facile à réaliser et peu coûteuse.

La description qui va suivre en regard des dessins annexés, donnés à titre d'exemples non limitatifs, fera bien comprendre en quoi consiste l'invention et comment elle peut être réalisée.

La figure 1 est une vue en perspective d'une fourchette pour broche de rotissoire, conforme à l'invention.

La figure 2 est une vue de côté de la fourchette pour broche de rotissoire, conforme à l'invention.

La figure 3 est une vue de dessus de la fourchette des figures 1 et 2 après découpage et avant formage.

La figure 4 est une vue en perspective d'une variante de réalisation de la fourchette pour broche de rotissoire, conforme à l'invention.

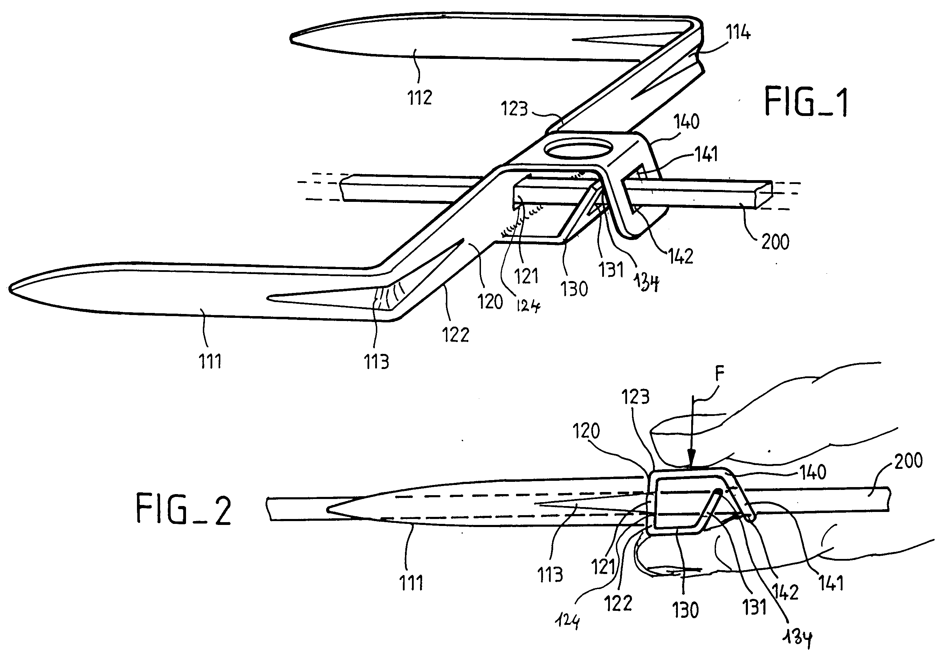

La figure 1 montre en perspective une fourchette pour une broche 200 de rotissoire. Cette fourchette est formée de deux dents 111,112 parallèles reliées par un travers 120 présentant un trou 121 de guidage de ladite broche. Dans l'exemple de réalisation de la figure 1, la broche 200 a une section carrée dont la largeur peut être égale à 6?8 ou 10 mm. Bien entendu, la section de la broche pourrait tout aussi bien être de forme rectangulaire ou triangulaire, le trou 121 de guidage ayant alors une forme identique et des dimensions permettant à la broche 200 de coulisser librement. On peut voir sur la figure 1 que la fourchette comporte également une patte 130 de guidage présentant un deuxième trou 131 de guidage de la broche 200. La patte 130 de guidage est une languette fixée à une extrémité sur un premier côté 122 du travers 120, et repliée à son autre extrémité dans laquellle est percé le deuxième trou 131 de guidage dont la section apparente, vue de la broche 200, est identique à celle du premier trou 121 de guidage du travers 120. Les deux trous 121,131 de guidage définissent parfaitement la position respective de la fourchette et de la broche et le chemin de coulissement de la broche par rapport à la fourchette.

La fourchette de la figure 1 comporte en outre une patte 140 de blocage/déblocage élastique portant un trou 141 de blocage/déblocage de la broche 200. Cette patte 140 de blocage/déblocage a également la forme d'une languette fixée à une extrémité à un deuxième côté 123 du travers 120, opposé au premier côté 122, et repliée à son autre extrémité dans laquelle est percé le trou 141 de blocage/déblocage. L'élasticité de la patte 140 de blocage/déblocage provient notamment de son bras de levier plus important par rapport au deuxième côté 123 du travers 120. C'est pourquoi l'extrémité de la patte 140 de blocage/déblocage portant le trou 141 de blocage/déblocage peut être située au-delà de la patte 130 de guidage par rapport au travers 120.

La section apparente, vue de la broche 200, du trou 141 de blocage/déblocage est supérieure, au moins dans une direction perpendiculaire au travers 120, à celle des trous 121,131 de guidage et est prévue de telle manière qu'en position de repos, la patte 140 de blocage/déblocage exerce sur la broche 200 un effort de blocage par la base 142 du trou 141 de blocage/déblocage. Cet effort de blocage immobilise la broche 200 en la mettant en appui forcé, d'une part, contre le bord supérieur 134 du deuxième trou 131 de blocage et, d'autre part, contre le bord inférieur 124 du trou 121 de blocage. La broche 200 a donc la tendance à se placer en travers, en porte-à-faux, dans le chemin de coulissement défini par les trous 121,131 de guidage. Ces deux appuis forcés génèrent des forces de frottement empêchant tout coulissement de la broche 200 qui se trouve donc bloquée.

La patte 130 de guidage est reliée rigidement au travers 120 de la fourchette en ce sens qu'aucun mouvement sensible de ladite patte 130 de guidage par rapport au travers 120 ne peut se produire lors de la mise en oeuvre de la patte 140 de blocage/déblocage.

Ainsi que le montre la figure 2, le déblocage de la fourchette s'effectue par une action opposée exercée sur la patte 140 de blocage/déblocage, comme indiqué par la flèche F, qui, du fait de son élasticité et du jeu lié aux dimensions plus grandes du trou 141 de blocage/déblocage, supprime l'effort de blocage et les appuis forcés contre les bords 124, 134 des trous 121,131 de guidage, et libère ainsi la broche 200. Celle-ci peut donc à nouveau coulisser sans frottement à travers les trous 121, 131 de guidage.

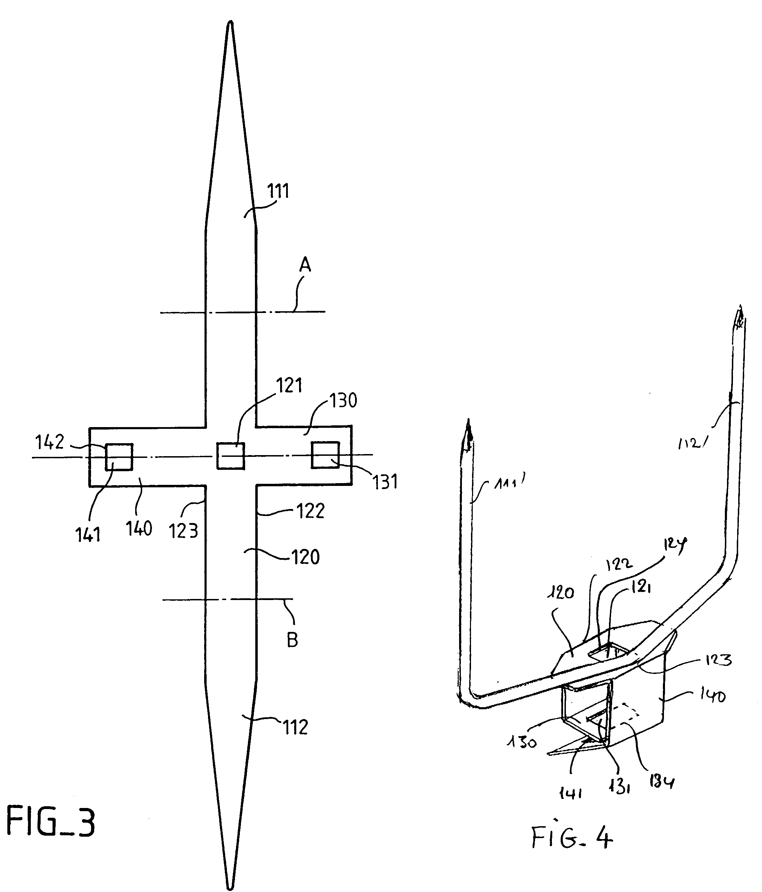

De manière très avantageuse, la fourchette pour broche de rotissoire montrée aux figures 1 et 2 peut être réalisée à partir d'une pièce unique découpée dans une tôle d'acier et formée dans un outil à suivre. La figure 3 montre la fourchette après découpage et avant formage. Les éléments représentés sur la figure 3 portent les mêmes repères numériques que sur les figures 1 et 2.

La pièce de la figure 3 peut être estampée au niveau des lignes A et B de façon à ce que, après formage, la fourchette comporte des rainures 113,114 de raidissement aux angles formés par le travers 120 et les dents 111,112, comme l'indiquent les figures 1 et 2.

La figure 4 montre une variante d'exécution de la fourchette de l'invention, dans laquelle les dents 111',112' sont réalisées par un fil métallique plié en U soudé au travers 120.

## Revendications

**1 -** Fourchette pour broche (200) de rotissoire, formée de deux dents (111,112;111',112') parallèles reliées par un travers (120) présentant un trou (121) de guidage de ladite broche, caractérisée en ce que ladite fourchette comporte également une patte (130) de guidage présentant un deuxième trou (131) de guidage de la broche (200), fixée sur un premier côté (122) du travers (120), et une patte (140) de blocage/déblocage élastique portant un trou (141) de blocage/déblocage de la broche (200), fixée sur un deuxième côté (123) du travers, opposé au premier (122), et apte à exercer sur la broche un effort de blocage immobilisant ladite broche (200) contre des bords opposés (124,134) des trous (121,131) de guidage, l'effort de blocage étant supprimé de manière à libérer la broche par une action opposée exercée sur la patte (140) de blocage/ déblocage.

**2 -** Fourchette pour broche de rotissoire selon la revendication 1, caractérisée en ce qu'elle est constituée d'une pièce unique découpée dans une tôle d'acier et formée dans un outil à suivre.

**3 -** Fourchette pour broche de rotissoire selon la revendication 2, caractérisée en ce qu'elle comporte des rainures (113,114) de raidissement aux angles formés par le travers (120) et les deux dents (111,112).

**4 -** Fourchette pour broche de rotissoire selon la revendication 1, caractérisée en ce que lesdites dents (111',112') sont réalisées par un fil métallique plié en U soudé au travers (120).
